# FASCICULE DE BREVET EUROPEEN

(11) **EP 3 164 627 B1**
(45) Date de publication et mention de la délivrance du brevet: **18.04.2018**
(21) Numéro de dépôt: 15742369.0
(22) Date de dépôt: 06.07.2015
(51) Int. Cl.: F16K 11/052

(54) **ENSEMBLE POUR UN CIRCUIT D'AIR DE MOTEUR THERMIQUE**
MONTAGE FÜR EINEN LUFTKREISLAUF EINES VERBRENNUNGSMOTORS
ASSEMBLY FOR AN AIR CIRCUIT OF A COMBUSTION ENGINE

(30) Priorité: 04.07.2014 FR 1456437
(43) Date de publication de la demande: 10.05.2017
(73) Titulaire: Valeo Systèmes de Contrôle Moteur, 95800 Cergy Saint Christophe (FR)
(72) Inventeur: LALLEMANT, Mathieu, 95892 CERGY-PONTOISE (FR)
(74) Mandataire: Garcia, Christine
(86) Numéro de dépôt international: PCT/FR2015/051860
(87) Numéro de publication internationale: WO 2016/001611

(56) Documents cités:
- WO-A1-03/044327
- WO-A1-2004/031556
- DE-A1-102012 020 648

## Description

La présente invention concerne un ensemble pour circuit d'air de moteur thermique.

L'invention s'applique notamment, mais non exclusivement, dans le domaine de l'automobile, le moteur thermique permettant alors de propulser le véhicule. Les documents WO2004/031556, WO03/044327 et DE102012020648 décrivent un tel ensemble. L'ensemble comprend une première conduite et une deuxième conduite formant une dérivation d'une portion de la première conduite, les première et deuxième conduites étant aptes à être parcourues par un fluide. L'ensemble comprend encore un système d'aiguillage du fluide permettant de faire varier la répartition du fluide entre la portion de la première conduite et la deuxième conduite.

Il est connu de munir le système d'aiguillage d'un actionneur permettant de faire varier la répartition du fluide entre la portion de la première conduite et la deuxième conduite. Un tel actionneur a cependant un coût et nécessite une loi de commande adaptée.

L'invention vise à remédier à cet inconvénient tout en assurant la répartition souhaitée de fluide entre la portion de la première conduite et la deuxième conduite.

L'invention y parvient, selon l'un de ses aspects, à l'aide d'un ensemble pour circuit d'air de moteur thermique, comprenant :
- une première conduite apte à acheminer du fluide,
- une deuxième conduite s'étendant entre une entrée dans la première conduite et une sortie dans la première conduite, de manière à former une dérivation d'une portion de la première conduite, la deuxième conduite comprenant une source de variation de pression,
- un volet d'aiguillage du fluide dans l'une de la deuxième conduite et de ladite portion de la première conduite, le volet étant mobile entre :
   - une première position permettant au fluide de circuler majoritairement dans la portion de la première conduite et
   - une deuxième position permettant au fluide de circuler majoritairement dans la deuxième conduite,
- un organe de maintien exerçant un couple configuré pour amener ou maintenir le volet d'aiguillage dans la première position,
le volet passant de la première dans la deuxième position lorsque la variation de pression générée dans la deuxième conduite par la source dépasse une valeur prédéfinie, cette variation de pression exerçant alors sur le volet d'aiguillage un couple permettant ce passage dans la deuxième position, malgré le couple exercé par l'organe de maintien,
la paroi de la deuxième conduite au niveau du volet d'aiguillage et le volet étant configurés pour définir une section de passage pour le fluide circulant dans la deuxième conduite, ladite section augmentant au plus tôt lorsque ledit volet atteint une troisième position dans laquelle il obture ladite portion de la première conduite.

L'ensemble ci-dessus tire parti de la présence dans la deuxième conduite de la source de variation de pression pour modifier la position du volet. Grâce à la configuration du volet, de la paroi de la deuxième conduite au niveau du volet, la section de passage pour le fluide circulant dans la deuxième conduite augmente au plus tôt lorsque le volet atteint une position dans laquelle il obture la portion de la première conduite. Une telle configuration permet d'éviter que lorsque le volet est dans une position intermédiaire entre la première et la deuxième position, du fluide circulant dans la deuxième conduite ne puisse circuler également dans la portion de la première conduite, c'est-à-dire dans le sens allant de la sortie dans la première conduite vers l'entrée dans la première conduite.

La section de passage pour le fluide circulant dans la deuxième conduite peut être constante lorsque le volet est dans une position comprise entre la première et la troisième position, la section de passage étant comprise entre 0 et 50 % de la section de la deuxième conduite, notamment entre 2 et 40 %, par exemple entre 3 et 10 %.

Le volet peut comporter :
- une première partie agencée pour obturer une partie de la deuxième conduite, lorsque le volet est dans la première position,
- une deuxième partie, distincte de la première partie, agencée pour obturer la portion de la première conduite lorsque le volet est dans la troisième position.

Le volet d'aiguillage peut être disposé au niveau de la sortie de la deuxième conduite dans la première conduite.

Le volet d'aiguillage peut être disposé au niveau de la portion de la première conduite.

Le volet d'aiguillage peut être disposé en aval de la source de variation de pression.

Le volet d'aiguillage peut être disposé au niveau de la sortie de la deuxième conduite dans la première conduite, le volet étant disposé en aval de la source de variation de pression.

Le volet d'aiguillage peut être disposé à la jonction entre la deuxième conduite et la portion de la première conduite, le volet étant disposé en aval de la source de variation de pression.

Dans la première position du volet, la première partie peut obturer partiellement la sortie dans la première conduite. Le fluide peut ainsi circuler majoritairement dans la première conduite. Le terme « majoritairement » employé ci-dessus doit être compris aussi bien comme signifiant « plus de la moitié en débit du fluide dans la première conduite en amont de l'entrée de la deuxième conduite dans la première conduite » que « la totalité en débit du fluide dans la première conduite en amont de l'entrée de la deuxième conduite dans la première conduite ».

Dans la deuxième position, le fluide peut emprunter la deuxième conduite. Dans cette deuxième position, la totalité du fluide peut ainsi emprunter la deuxième conduite, aux fuites près qui peuvent exister au niveau de la deuxième partie du volet.

La deuxième partie du volet peut être agencée pour définir avec la paroi de la deuxième conduite, ladite section de passage.

La deuxième partie du volet peut être agencée pour définir avec la paroi de la première conduite, ladite section de passage.

Les première et deuxième parties du volet peuvent pivoter autour d'un unique axe de pivotement du volet. Cet unique axe permet de simplifier la conception du volet tout en autorisant un déplacement synchronisé des première et deuxième parties.

Les première et deuxième parties du volet peuvent être décalées angulairement autour de l'axe de pivotement.

Les première et deuxième parties du volet peuvent être décalées axialement le long de l'axe de pivotement. Ce décalage axial permet l'isolement des première et deuxième conduites ce qui a pour effet de limiter les fuites au niveau du volet.

Les première et deuxième parties du volet peuvent être décalées angulairement autour de l'axe de pivotement et axialement le long dudit axe.

Les première et deuxième parties du volet peuvent être des parois planes et décalées d'un angle compris entre 10° et 160°, notamment entre 50° et 120°, l'angle étant mesuré dans un plan orthogonal à l'axe de pivotement.

Les première et deuxième parties du volet peuvent en variante être chacune une paroi plane, ces parois étant alignées l'une par rapport à l'autre.

Les première et deuxième parties du volet peuvent en variante être chacune une paroi courbe.

L'ensemble peut être dépourvu d'actionneur provoquant le passage du volet de la première dans la deuxième position. On entend par actionneur, un moyen dédié à la génération d'une force sur le volet, le moyen étant distinct de l'organe de maintien et de la source de variation de pression.

L'ensemble peut comprendre un unique volet pour l'aiguillage du fluide dans l'une de la deuxième conduite et de ladite portion de la première conduite.

La source de variation de pression est notamment un compresseur électrique disposé dans la deuxième conduite. Un tel compresseur électrique peut permettre d'alimenter rapidement le moteur thermique en air comprimé lorsque le moteur thermique fonctionne à bas régime ou lors d'une augmentation brutale de charge. Ce compresseur seconde par exemple alors un turbocompresseur associé au moteur thermique, pour remédier au temps de réponse important du turbocompresseur, encore appelé « turbolag ».

La première et la deuxième conduite peuvent faire partie du circuit d'admission du moteur thermique.

Le compresseur électrique peut être disposé en aval d'une sortie d'une boucle de recirculation des gaz d'échappement (EGR en anglais).

Le compresseur électrique peut être disposé en amont, en aval ou en parallèle du compresseur du turbocompresseur.

Les première et deuxième positions peuvent être des positions extrêmes pour le déplacement du volet.

Le volet peut venir en arrêt contre une butée dans au moins l'une des première et deuxième positions.

L'organe de maintien peut être choisi en adéquation avec la source de variation de pression, afin de permettre le maintien du volet dans la première position tant que la source de variation de pression génère une pression dans la deuxième conduite inférieure strictement à la valeur prédéfinie de pression.

L'organe de maintien peut être choisi en adéquation avec la source de variation de pression, afin de permettre le passage du volet dans la deuxième position lorsque la variation de pression générée dans la deuxième conduite par la source dépasse la valeur prédéfinie

Indépendamment ou en combinaison de ce qui précède, la surface de la première partie obturant au moins en partie la deuxième conduite peut être choisie afin de permettre le passage du volet dans la deuxième position à partir de la valeur prédéfinie de variation de pression générée par la source de variation de pression.

Les première et deuxième conduites peuvent s'étendre selon des directions parallèles, la sortie et l'entrée étant formées par des portions coudées de la deuxième conduite.

Dans tout ce qui précède, l'organe de maintien peut être un organe de rappel élastique. Cet organe de rappel peut permettre de ramener le volet de la deuxième position dans la première position lorsque la variation de pression générée dans la deuxième conduite diminue, notamment devient inférieure à la valeur prédéfinie.

L'organe de rappel élastique peut comprendre un ressort. La source de variation de pression et l'une au moins de la raideur et de la position à vide du ressort sont par exemple choisies de manière à ce que le couple exercé sur le volet du fait de l'existence de la variation de pression puisse prendre une valeur supérieure à la valeur du couple exercée par le ressort sur ce volet. Le volet d'aiguillage peut alors passer de la première dans la deuxième position, cette inégalité entre les valeurs de couple mentionnée ci-dessus persistant jusqu'à ce que le volet atteigne la deuxième configuration.

Dans tout ce qui précède, le fluide peut être un gaz, tel que de l'air, des gaz d'échappement recirculés depuis l'échappement du moteur, ou un mélange d'air et de gaz d'échappement recirculés.

Dans tout ce qui précède, le compresseur électrique peut comprendre un moteur à reluctance variable, ayant par exemple une puissance nominale comprise entre 1 et 10 kW, par exemple de 5,5 kW pour une vitesse de rotation de 70 000 tr/min.

L'ensemble est par exemple intégré à un véhicule automobile.

L'invention pourra être mieux comprise à la lecture de la description qui va suivre d'exemples non limitatifs de mise en oeuvre de celle-ci et à l'examen du dessin annexé sur lequel :
- les figures 1 à 4 représentent de façon schématique un exemple d'ensemble selon l'invention, le volet étant respectivement dans la première position, dans une position intermédiaire entre la première et la troisième position, dans la troisième position et dans la deuxième position,
- les figures 5 à 7 représentent de façon schématique un autre exemple d'ensemble selon l'invention, le volet étant respectivement dans la première position, dans la troisième position et dans la deuxième position, et
- les figures 8 à 10 représentent de façon schématique un autre exemple d'ensemble selon l'invention, le volet étant respectivement dans la première position, dans la troisième position, et dans la deuxième position.

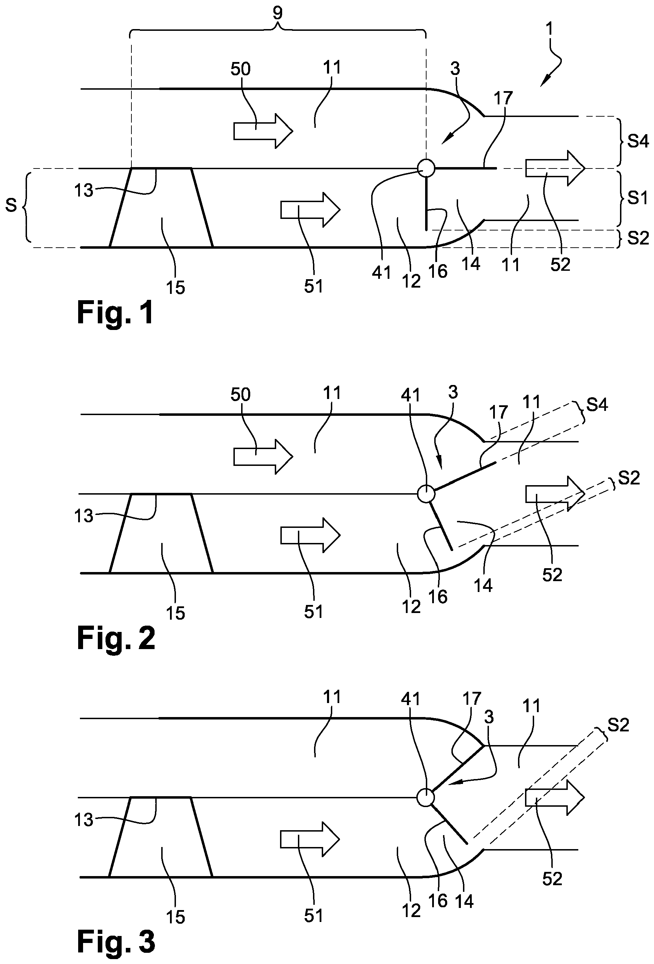

On a représenté sur la figure 1, un exemple d'ensemble 1 pour circuit d'air de moteur thermique. Il s'agit par exemple d'un moteur thermique de véhicule, fonctionnant par exemple à l'essence ou au diesel. L'ensemble 1 fait dans l'exemple partie du circuit d'admission du moteur thermique. Il est par exemple disposé en aval de la sortie dans le circuit d'admission d'une boucle de recirculation des gaz d'échappement (EGR).

L'ensemble 1 peut également être associé à un compresseur mécanique faisant partie d'un turbocompresseur et non représenté sur les figures.

L'ensemble 1 comprend :
- une première conduite 11 apte à acheminer du fluide,
- une deuxième conduite 12 s'étendant entre une entrée 13 dans la première conduite 11 et une sortie 14 dans la première conduite 11.

Comme représenté sur la figure 1, les première 11 et deuxième 12 conduites s'étendent selon des directions parallèles, la sortie 14 et l'entrée 13 étant formées par des portions coudées de la deuxième conduite.

Comme représenté sur la figure 1, la deuxième conduite 12 forme ainsi une dérivation d'une portion 9 de la première conduite 11. Réciproquement, la portion 9 de la première conduite 11 permet de contourner (« bypass en anglais ») la deuxième conduite 12.

La deuxième conduite 12 comprend un compresseur électrique 15 formant une source de variation de pression. Ce compresseur électrique 15 permet de seconder le turbocompresseur notamment à bas régime ou en cas d'augmentation brutale de charge. Ce compresseur électrique 15 comprend dans l'exemple considéré un moteur à reluctance variable.

La première conduite 11 comprend dans l'exemple considéré, un volet 3 d'aiguillage pivotant disposé au niveau de la sortie 14 dans la première conduite 11.

Le volet 3 est maintenu ou amené en position telle que représentée sur la figure 1, par un ressort non représenté formant un organe de maintien. Le ressort exerce une force de maintien dont la valeur est liée à la valeur de sa raideur.

Lorsque le volet 3 est dans la position telle que représentée sur la figure 1, il est dans une position appelée par la suite « première position ». Cette première position est une position de repos pour le volet.

Le volet 3 comporte dans l'exemple des figures 1 à 4 une première partie 16 et une deuxième partie 17 reliées par un axe de pivotement 41. Les première 16 et deuxième 17 parties sont décalées angulairement d'un angle d'environ 90° autour de l'axe de pivotement 41. Cet axe de pivotement 41 est situé sensiblement à la jonction entre la deuxième conduite et la portion de la première conduite 11, au niveau de la sortie 14. Dans la première position du volet 3, la première partie 16 s'étend dans la deuxième conduite 12. Dans l'exemple considéré, cette première partie 16 est de section S1 réduite par rapport à la section S de la deuxième conduite 12, de sorte qu'elle permet l'existence d'une section de passage S2 pour le fluide entre la première partie 16 et la deuxième conduite 12 au niveau de la sortie 14. La première partie 16 s'étend par exemple perpendiculairement à la direction selon laquelle s'étend la deuxième conduite au niveau de la sortie 14, de sorte que la première partie 16 obture une partie de la deuxième conduite 12.

Dans la première position du volet 3, la deuxième partie 17 s'étend dans la première conduite 11 par exemple parallèlement à la portion 9 de la première conduite 11, de sorte que la section de passage pour le fluide soit maximale, dans la portion 9 de la première conduite 11.

Dans la première position du volet 3, le fluide s'écoulant dans la première conduite 11 en amont de la deuxième conduite 12 s'écoule majoritairement dans la portion 9 de la première conduite 11 contournant la deuxième conduite 12. Le terme « majoritairement » employé ci-dessus doit être compris comme signifiant « plus de la moitié en débit du fluide dans la première conduite 11 en amont de l'entrée 13 de la deuxième conduite 12 ».

Dans cette première position du volet 3, le compresseur électrique 15 fonctionne dans l'exemple considéré à une vitesse de rotation d'environ 5000 tr/min, appelée « vitesse de ralenti ». Cette vitesse de ralenti permet d'éviter un temps de réaction trop important pour atteindre des vitesses de rotation supérieures, comme par exemple une vitesse de 50 000 tr/min. À cette vitesse de ralenti, une partie du fluide s'écoulant dans la première conduite 11 en amont de la deuxième conduite 12 s'écoule dans la deuxième conduite 12 via la section de passage pour le fluide existant entre la première partie 16 du volet 3 et la deuxième conduite 12 au niveau de la sortie 14. Le ressort exerce une force de maintien sur le volet 3, cette force étant supérieure au couple exercé par la pression générée par le compresseur électrique dans la deuxième conduite 12. Dans cette première position du volet 3, le chemin parcouru par le fluide est représenté par les flèches 50, 51 et 52. Le fluide s'écoulant dans la première conduite 11 en amont de la deuxième conduite 12 s'écoule majoritairement dans la portion de la première conduite 11, selon la flèche 50 et pour le reste, dans la deuxième conduite 12, selon la flèche 51. Le fluide s'écoulant dans la première conduite 11, en aval de la sortie 14, représenté par la flèche 52 est égal à la somme des fluides représentés par les flèches 50 et 51.

On a représenté sur la figure 2, l'ensemble 1 de la figure 1, le volet 3 ayant pivoté autour de l'axe 41, par exemple dans le sens trigonométrique, à partir de la première position. Le volet est ici dans une position dans laquelle la première partie 16 du volet 3 s'étend dans la deuxième conduite 12 et forme la section de passage S2 pour le fluide avec la deuxième conduite 12 au niveau de la sortie 14, la section de passage S2 étant la même que lorsque le volet est dans la première position, comme représenté à la figure 1. La deuxième partie 17 obture une partie de la portion 9 de la première conduite 11. Dans cette position, le volet 3 obture une partie de chacune des première et deuxième conduites. Dans cette position, le compresseur électrique 15 a une vitesse supérieure à celle qu'il a lorsque le volet 3 est dans la première position, à savoir, dans l'exemple considéré, une vitesse supérieure strictement à 5000 tr/min

On a représenté sur la figure 3, l'ensemble 1 de la figure 1, le volet 3 ayant pivoté autour de l'axe 41, par exemple dans le sens trigonométrique, à partir de la position telle que représentée à la figure 2. Le volet 3 est ici représenté dans une troisième position dans laquelle la première partie 16 du volet 3 s'étend dans la deuxième conduite 12 et forme la section de passage S2 pour le fluide avec la deuxième conduite 12 au niveau de la sortie 14, la section S2 étant la même que lorsque le volet est dans l'une des première ou deuxième position, comme représenté respectivement aux figures 1 et 2. Dans l'exemple considéré, la deuxième partie 17 obture totalement la portion 9 de la première conduite 11. Dans cette troisième position, le fluide en provenance de la deuxième conduite 12, représenté par la flèche 51, ne peut circuler vers la portion 9 de la première conduite 11 et s'écoule ainsi totalement dans la première conduite 11, en aval de la sortie 14, c'est-à-dire selon la flèche 52. Ainsi, le fluide est totalement dérivé dans la deuxième conduite 12.

La position du volet 3 telle que représentée à la figure 2 est ainsi une position intermédiaire entre la première et la troisième position alors que le volet pivote, dans le même sens de rotation depuis la position de repos vers la troisième position.

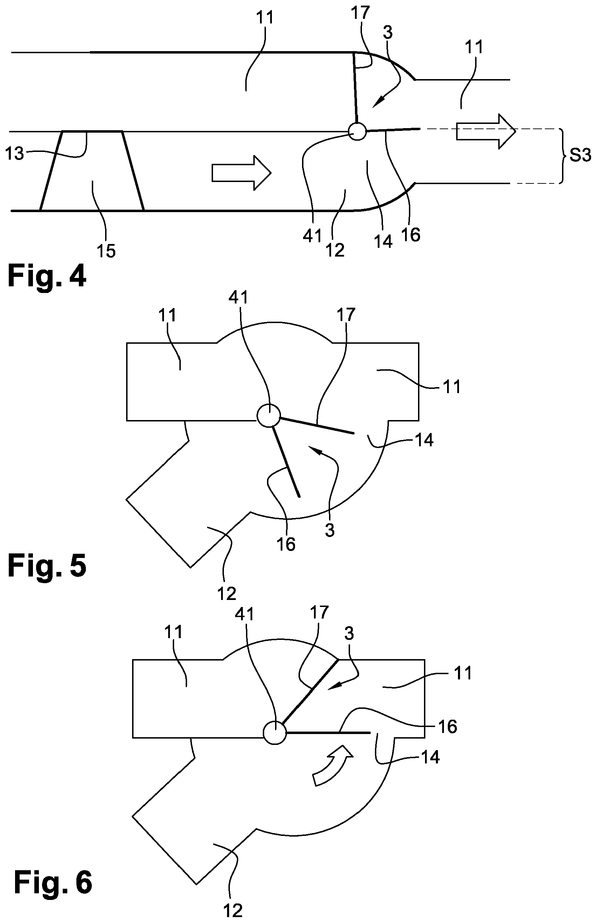

On a représenté sur la figure 4, l'ensemble 1 de la figure 1, le volet 3 ayant pivoté autour de l'axe 41, par exemple dans le sens trigonométrique, à partir de la position telle que représentée à la figure 3. Le volet 3 est ici dans une deuxième position dans laquelle la première partie 16 s'étend dans la première conduite 11 par exemple parallèlement à la portion de la première conduite 11, de sorte que la section de passage S3 pour le fluide soit maximale, dans la deuxième conduite 12. La deuxième partie 17 s'étend par exemple perpendiculairement à l'axe selon lequel s'étend la portion 9 de la première conduite 11 au niveau de la sortie 14, de sorte que la deuxième partie 17 obture totalement la portion 9 de la première conduite 11.

Dans cette deuxième position, le fluide en provenance de la deuxième conduite 12, représenté par la flèche 51, ne peut circuler vers la portion 9 de la première conduite 11 et s'écoule ainsi totalement dans la première conduite 11, en aval de la sortie 14, c'est-à-dire selon la flèche 52. Ainsi, le fluide est totalement dérivé dans la deuxième conduite 12. À la différence de la position représentée à la figure 3, dans cette deuxième position du volet, la section de passage pour le fluide circulant dans la deuxième conduite 12 est maximale.

Comme cela va maintenant être décrit, l'invention permet le changement de position du volet 3 depuis la première position décrite ci-dessus en référence à la figure 1 à la troisième position décrite ci-dessus en référence à la figure 3, puis à la deuxième position décrite ci-dessus en référence à la figure 4. Le passage de la première vers la deuxième position est obtenu par un pivotement du volet 3 dans le même sens de rotation et sans qu'il soit fait recours à un actionneur dédié pour faire pivoter le volets 3, notamment sans faire recours à un actionneur électrique, pneumatique ou électromagnétique.

L'ensemble 1 passe de la première à la troisième, puis à la deuxième position lorsque le compresseur électrique 15 génère une variation de pression dépassant une valeur prédéfinie pour fournir de l'air comprimé au moteur thermique. Cette variation de pression correspond dans cet exemple à une dépression à l'entrée 13 et à une surpression à la sortie 14. Dans l'exemple considéré, cette variation de pression est obtenue lorsque le compresseur 15 passe d'une vitesse de rotation de 5 000 tr/min à une vitesse de 70 000 tr/min.

Du fait de cette variation de pression, une force s'exerce sur le volet 3 par l'intermédiaire de la première partie 16 s'étendant en regard de la deuxième conduite 12 lorsque le volet 3 est dans la première position.

Lorsque la force exercée sur le volet 3 du fait de la surpression générée par le compresseur électrique 15 devient supérieure à une valeur prédéfinie, qui est dans l'exemple décrit supérieure à la force de rappel exercée sur ledit volet par l'organe de maintien, ce dernier pivote autour de l'axe 41, de sorte que le volet 3, partant de la position de repos, se trouve dans la deuxième position via un passage intermédiaire par la troisième position.

Le compresseur électrique 15 joue ainsi le rôle d'un actionneur provoquant le passage du volet 3 de la première dans la deuxième position.

Lorsque la variation de pression générée par le compresseur électrique 15 exerce sur le volet 3 une force inférieure à la force de rappel exercée par l'organe de maintien correspondant, le volet 3 est rappelé dans la première position.

Lors du déplacement du volet d'aiguillage 3, partant de la première et avant d'atteindre la troisième position, il existe :
- une section de passage S4 pour le fluide au niveau de la deuxième partie 17 du volet 3 et la paroi de la portion 9 de la première conduite 11, et
- une section de passage S2 pour le fluide au niveau de la première partie 16 du volet 3 et la paroi de la deuxième conduite 12, cette dernière section étant constante lors du passage du volet 3 de la première à la troisième position.

La variation de pression générée par le compresseur 15 a pour effet de faire baisser le débit de fluide circulant dans la portion 9 et d'augmenter le débit de fluide circulant dans la deuxième conduite 12. Juste avant que le volet 3 n'arrive dans la troisième position, le débit de fluide circulant dans la portion 9 est sensiblement nul et le débit de fluide circulant dans la deuxième conduite 12 est égal au débit de fluide circulant dans la première conduite 11 en aval de la sortie 14. Ainsi, aucun fluide ne peut circuler depuis la sortie 14, vers la portion 9. En conséquence, l'ensemble 1 est agencé pour permettre que ce débit circulant dans la deuxième conduite 12 soit intégralement aspiré par le moteur thermique.

Lors du passage du volet 3 de la troisième position à la deuxième position, la portion 9 est obturée et aucun fluide ne peut circuler depuis la sortie 14, vers la portion 9. Le compresseur 15 peut ainsi générer une variation de pression dans la deuxième conduite 12 de nature à créer une surpression dans la première conduite 11 en aval de la sortie 14 sans risquer que cette surpression ne permettre au fluide de circuler dans la portion 9.

On a représenté sur les figures 5 à 7, un autre exemple d'ensemble 1, le volet 3 étant respectivement dans la première position, dans la troisième position et dans la deuxième position. Cet autre exemple d'ensemble 1 diffère par la valeur d'angle entre les parties du volet.

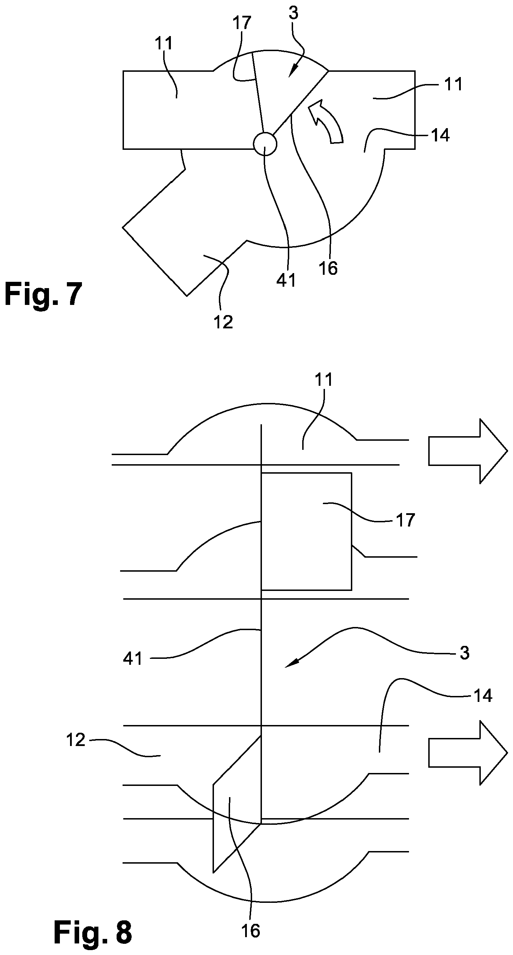

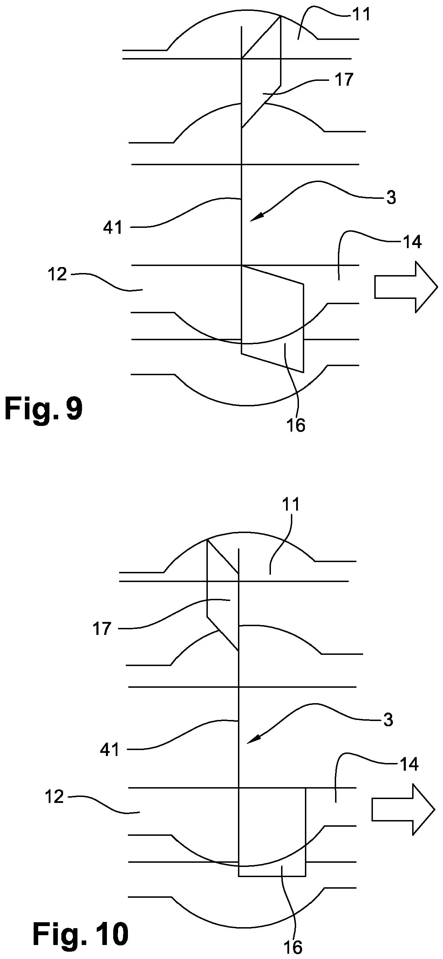

On a représenté sur les figures 8 à 10, un autre exemple d'ensemble 1, le volet 3 étant respectivement dans la première position, dans la troisième position et dans la deuxième position.

Cet autre exemple d'ensemble 1 diffère par la valeur d'angle entre les parties du volet et la position axiale des parties du volet le long de l'axe de pivotement du volet. Dans cet exemple de réalisation, l'axe de pivotement 41 s'étend à la fois au niveau de la portion 9 de la première conduite 11 et au niveau de la deuxième conduite 12, en aval du compresseur électrique 15.

Les première 16 et deuxième 17 parties sont des parois planes décalées d'un angle d'environ 45°, l'angle étant mesuré entre les projections des parties 16 et 17 du volet, dans un plan orthogonal à l'axe de pivotement 41.

Les première 11 et deuxième 12 conduites s'étendent, au niveau du volet 3, dans des directions parallèles. La sortie et l'entrée, ne sont pas représentées sur les figures 8 à 10 et sont formées par des portions coudées de la deuxième conduite.

La paroi de la portion 9 de la première conduite 11 au niveau du volet d'aiguillage 3 forme une portion de cylindre de révolution et la deuxième partie 17 du volet 3 vient au contact de ladite paroi au niveau de la portion de cylindre, lorsque le volet 3 obture la portion 9 de la première conduite 11.

La paroi de deuxième conduite 12 au niveau du volet d'aiguillage 3 forme une portion de cylindre de révolution et la première partie 16 du volet 3 forme la section de passage pour le fluide avec la paroi de la deuxième conduite 12.

L'expression « comprenant un » doit être comprise comme synonyme de l'expression « comprenant au moins un », sauf lorsque le contraire est spécifié.

## Revendications

1. Ensemble (1) pour circuit d'air de moteur thermique, comprenant :
- une première conduite (11) apte à acheminer du fluide,
- une deuxième conduite (12) s'étendant entre une entrée (13) dans la première conduite (11) et une sortie (14) dans la première conduite (11), de manière à former une dérivation d'une portion de la première conduite (11), la deuxième conduite (12) comprenant une source de variation de pression (15),
- un volet d'aiguillage (3) du fluide dans l'une de la deuxième conduite (12) et de ladite portion de la première conduite (11), le volet (3) étant mobile entre :
- une première position permettant au fluide de circuler majoritairement dans la portion de la première conduite (11) et
- une deuxième position permettant au fluide de circuler majoritairement dans la deuxième conduite (12),
- un organe de maintien exerçant un couple configuré pour amener ou maintenir le volet d'aiguillage (3) dans la première position,
le volet (3) passant de la première dans la deuxième position lorsque la variation de pression générée dans la deuxième conduite (12) par la source (15) dépasse une valeur prédéfinie, cette variation de pression exerçant alors sur le volet d'aiguillage (3) un couple permettant ce passage dans la deuxième position, malgré le couple exercé par l'organe de maintien,
la paroi de la deuxième conduite (12) au niveau du volet d'aiguillage (3) et le volet (3) étant configurés pour définir une section de passage pour le fluide circulant dans la deuxième conduite (12), ladite section augmentant au plus tôt lorsque ledit volet (3) atteint une troisième position dans laquelle il obture ladite portion de la première conduite (11).

2. Ensemble (1) selon la revendication précédente, le volet (3) étant disposé en aval de la source de variation de pression (15).

3. Ensemble (1) selon l'une des revendications 1 ou 2, le volet (3) comportant :
- une première partie (16) agencée pour obturer une partie de la deuxième conduite (12), lorsque le volet (3) est dans la première position,
- une deuxième partie (17), distincte de la première partie (16), agencée pour obturer la portion de la première conduite (11) lorsque le volet (3) est dans la troisième position.

4. Ensemble (1) selon la revendication précédente, la première partie (16) étant agencée pour définir avec la paroi de la deuxième conduite (12), ladite section de passage.

5. Ensemble (1) selon l'une des revendications 2 à 4, les première et deuxième parties (16,17) pivotant autour d'un unique axe de pivotement (41) du volet (3).

6. Ensemble (1) selon la revendication précédente, les première et deuxième parties (16,17) étant décalées angulairement autour de l'axe de pivotement (41).

7. Ensemble (1) selon l'une des revendications 5 ou 6, les première et deuxième parties (16,17) étant des parois planes et décalées d'un angle compris entre 10° et 160°, notamment entre 50° et 120°, l'angle étant mesuré dans un plan orthogonal à l'axe de pivotement (41).

8. Ensemble (1) selon l'une quelconque des revendications précédentes, étant dépourvu d'actionneur provoquant le passage du volet (3) de la première dans la deuxième position.

9. Ensemble (1) selon l'une des revendications précédentes, comprenant un unique volet (3) pour l'aiguillage du fluide dans l'une de la deuxième conduite (12) et de ladite portion de la première conduite (11).

10. Ensemble (1) selon l'une des revendications précédentes, comprenant un compresseur électrique (15) disposé dans la deuxième conduite (12).

## Patentansprüche

1. Einheit (1) für einen Luftkreislauf eines Verbrennungsmotors, umfassend:
- eine erste Leitung (11), die geeignet ist, Fluid zu liefern,
- eine zweite Leitung (12), die sich zwischen einem Einlass (13) in der ersten Leitung (11) und einem Auslass (14) in der ersten Leitung (11) erstreckt, um eine Ableitung eines Abschnitts der ersten Leitung (11) zu bilden, wobei die zweite Leitung (12) eine Druckvariationsquelle (15) umfasst,
- eine Verteilerklappe (3) des Fluids in einem von der zweiten Leitung (12) und dem Abschnitt der ersten Leitung (11), wobei die Klappe (3) bewegbar ist zwischen:
- einer ersten Position, die es dem Fluid gestattet, hauptsächlich im Abschnitt der ersten Leitung (11) zu zirkulieren, und
- einer zweiten Position, die es dem Fluid gestattet, hauptsächlich in der zweiten Leitung (12) zu zirkulieren,
- ein Halteelement, welches ein Drehmoment ausübt, das ausgelegt ist, die Verteilerklappe (3) in die erste Position zu führen oder in dieser zu halten,
wobei die Klappe (3) von der ersten in die zweite Position geht, wenn die Druckvariation, die von der Quelle (15) in der zweiten Leitung (12) erzeugt wird, einen vordefinierten Wert überschreitet, wobei diese Druckvariation dann auf die Verteilerklappe (3) ein Drehmoment ausübt, das diesen Übergang in die zweite Position trotz des vom Halteorgans ausgeübten Drehmoments gestattet,
wobei die Wand der zweiten Leitung (12) auf der Höhe der Verteilerklappe (3) und die Klappe (3) ausgelegt sind, eine Durchgangssektion für das in der zweiten Leitung (12) zirkulierende Fluid zu definieren, wobei die Sektion zunimmt, sobald die Klappe (3) eine dritte Position erreicht, in der sie den Abschnitt der ersten Leitung (11) verschließt.

2. Einheit (1) nach dem vorhergehenden Anspruch,
wobei die Klappe (3) stromabwärts von der Druckvariationsquelle (15) angeordnet ist.

3. Einheit (1) nach einem der Ansprüche 1 oder 2, wobei die Klappe (3) umfasst:
- einen ersten Teil (16), der eingerichtet ist, einen Teil der zweiten Leitung (12) zu verschließen, wenn die Klappe (3) in der ersten Position ist,
- einen zweiten Teil (17), der vom ersten Teil (16) verschieden und eingerichtet ist, den Abschnitt der ersten Leitung (11) zu verschließen, wenn die Klappe (3) in der dritten Position ist.

4. Einheit (1) nach dem vorhergehenden Anspruch,
wobei der erste Teil (16) eingerichtet ist, mit der Wand der zweiten Leitung (12) die Durchgangssektion zu definieren.

5. Einheit (1) nach einem der Ansprüche 2 bis 4,
wobei der erste und zweite Teil (16, 17) um eine einzelne Schwenkachse (41) der Klappe (3) schwenken.

6. Einheit (1) nach dem vorhergehenden Anspruch,
wobei der erste und zweite Teil (16, 17) winkelmäßig um die Schwenkachse (41) versetzt sind.

7. Einheit (1) nach einem der Ansprüche 5 oder 6,
wobei der erste und zweite Teil (16, 17) Wände sind, die eben und um einen Winkel zwischen 10° und 160°, insbesondere zwischen 50° und 120°, versetzt sind, wobei der Winkel in einer orthogonalen Ebene der Schwenkachse (41) gemessen wird.

8. Einheit (1) nach einem der vorhergehenden Ansprüche, welche keinen Betätiger aufweist, der den Übergang der Klappe (3) von der ersten in die zweite Position bewirkt.

9. Einheit (1) nach einem der vorhergehenden Ansprüche, umfassend eine einzelne Klappe (3) zum Verteilen des Fluids in einem von der zweiten Leitung (12) und dem Abschnitt der ersten Leitung (11).

10. Einheit (1) nach einem der vorhergehenden Ansprüche, umfassend einen elektrischen Kompressor (15), der in der zweiten Leitung (12) angeordnet ist.

## Claims

1. Assembly (1) for the air circuit of an internal combustion engine, comprising:
- a first duct (11) which can convey fluid,
- a second duct (12) which extends between an inlet (13) in the first duct (11) and an outlet (14) in the first duct (11), so as to form a bypass of a portion of the first duct (11), the second duct (12) comprising a source of pressure variation (15),
- a flap (3) for routing the fluid into either the second duct (12) or said portion of the first duct (11), the flap (10) being able to move between:
- a first position allowing the fluid to flow predominantly in the portion of the first duct (11) and
- a second position allowing the fluid to flow predominantly in the second duct (12),
- a holding member which exerts a torque configured to bring said routing flap (3) into the first position or to hold it there,
the flap (3) switching from the first position to the second position when the pressure variation generated in the second duct (12) by the source (15) exceeds a predefined value, this pressure variation then exerting, on the routing flap (3), a torque which allows this switching to the second position in spite of the torque exerted by the holding member,
the wall of the second duct (12) at the level of the routing flap (3) and the flap (3) itself being configured to define a passage cross section for the fluid flowing in the second duct (12), said cross section increasing no earlier than when said flap (3) reaches a third position in which it closes off said portion of the first duct (11).

2. Assembly (1) according to the preceding claim, the flap (3) being arranged downstream of the source of pressure variation (15).

3. Assembly (1) according to either of Claims 1 and 2, the flap (3) comprising:
- a first part (16) that is arranged so as to close off part of the second duct (12) when the flap (3) is in the first position,
- a second part (17) that is distinct from the first part (16) and is arranged so as to close off the portion of the first duct (11) when the flap (3) is in the third position.

4. Assembly (1) according to the preceding claim, the first part (16) being arranged so as to define, with the wall of the second duct (12), said passage cross section.

5. Assembly (1) according to one of Claims 2 to 4, the first and second parts (16, 17) pivoting about a single pivot axis (41) of the flap (3).

6. Assembly (1) according to the preceding claim, the first and second parts (16, 17) having an angular offset about the pivot axis (41).

7. Assembly (1) according to either of Claims 5 and 6, the first and second parts (16, 17) being walls that are planar and are offset by an angle of between 10° and 160°, in particular between 50° and 120°, the angle being measured in a plane orthogonal to the pivot axis (41).

8. Assembly (1) according to any one of the preceding claims, having no actuator causing the flap (3) to switch from the first position to the second position.

9. Assembly (1) according to one of the preceding claims, comprising a single flap (3) for routing the fluid into either the second duct (12) or said portion of the first duct (11).

10. Assembly (1) according to one of the preceding claims, comprising an electric compressor (15) arranged in the second duct (12).
